# EUROPEAN PATENT APPLICATION

(11) **EP 3 554 105 A1**
(43) Date of publication of application: **16.10.2019**
(21) Application number: 19167608.9
(22) Date of filing: 05.04.2019
(51) Int. Cl.: H04W 4/021, H04W 4/029, H04W 4/35

(54) **METHOD AND SYSTEM FOR GENERATION OF GEOFENCE SHAPE**

(30) Priority: 09.04.2018 US 201815948265
(71) Applicant: BlackBerry Limited, Waterloo, Ontario N2K 0A7 (CA)
(72) Inventor: AYOUB, Sameh, Waterloo, Ontario N2K 0A7 (CA); WILLIS, Edward Snow, Waterloo, Ontario N2K 0A7 (CA)
(74) Representative: MERH-IP Matias Erny Reichl Hoffmann Patentanwälte PartG mbB

(57) **Abstract**

A method at a network element for creating a geofence shape, the method including creating a geofenced area based on location information, the geofenced area having a default shape and size; receiving from a sensor apparatus, an event report, the event report including a location; associating the location of the event report with the geofenced area; determining that a number of event reports associated with the geofenced area exceeds a threshold; and creating a geofence shape for the geofenced area based on locations of the event reports.

## Description

### FIELD OF THE DISCLOSURE

The present disclosure relates to the transportation of goods, and in particular relates to geographic indicators for the transportation of goods.

### BACKGROUND

Shipping companies may use geofences for fleet tracking and management. Geofencing is a technique for monitoring and providing an alert in response to the movement of an electronic device, such as a computing device within a vehicle or a mobile device, into or out of a prescribed area around which a geofence is defined. A geofence is thus determined with reference to a geographical area. Location data from the electronic device is compared with coordinate ranges of the geofence to determine whether the electronic device is inside or outside the geofence.

Shipping companies often maintain geofences around important places, including but not limited to storage yards, client sites, maintenance sites, rest areas, among others. When a vehicle enters or exits a geofenced area, alerts can be provided and logs created.

However, the creation of such geofenced areas is typically done manually, which may be time consuming and burdensome. As an example, it may take up to one minute to create a geofenced area. If a company has five thousand geofenced areas, this will take five thousand minutes, or approximately ten working days, to create.

### BRIEF DESCRIPTION OF THE DRAWINGS

The present disclosure will be better understood with reference to the drawings, in which:
**Figure 1** is block diagram showing a computing device capable of being used in a vehicle;
**Figure 2** is a block diagram showing an environment for the operation of the computing device of **Figure 1**;
**Figure 3** is a process diagram for a process at a sensor apparatus for providing reports to a network element on detection of a trigger event;
**Figure 4** is a process diagram for a process at a network element for creating unshaped geofences;
**Figure 5** is a process diagram for a process at a network element for creating geofences shaped to capture geographic points at which trigger events have occurred;
**Figure 6** is a block diagram showing the shaping of a geofence based on a plurality of events reported from sensor apparatuses; and
**Figure 7** is a block diagram of an example computing device capable of being used in accordance with the embodiments of the present disclosure.

### DETAILED DESCRIPTION

The present disclosure provides a method at a network element for creating a geofence shape, the method comprising: creating a geofenced area based on location information, the geofenced area having a default shape and size; receiving from a sensor apparatus, an event report, the event report including a location; associating the location of the event report with the geofenced area; determining that a number of event reports associated with the geofenced area exceeds a threshold; and creating a geofence shape for the geofenced area based on locations of the event reports.

The present disclosure further provides a network element for creating a geofence shape, the network element comprising: a processor; and a communications subsystem, wherein the network element is configured to: create a geofenced area based on location information, the geofenced area having a default shape and size; receive from a sensor apparatus, an event report, the event report including a location; associate the location of the event report with the geofenced area; determine that a number of event reports associated with the geofenced area exceeds a threshold; and create a geofence shape for the geofenced area based on locations of the event reports.

The present disclosure further provides a computer readable medium for storing instruction code for creating a geofence shape, which, when executed by a processor of a network element, cause the network element to: create a geofenced area based on location information, the geofenced area having a default shape and size; receive from a sensor apparatus, an event report, the event report including a location; associate the location of the event report with the geofenced area; determine that a number of event reports associated with the geofenced area exceeds a threshold; and create a geofence shape for the geofenced area based on locations of the event reports.

Shipping companies may mark important places by defining a geofence around such a place. Important places are locations where a container or vehicle may be loaded, unloaded, stop for long periods of time, among other options. Such important locations may, for example, include a company yard, a client site, a maintenance site, a board checkpoint, train stations, airports, shipping yards, among other such locations.

For example, areas that are used to transfer items, whether legitimately or illegitimately can be marked with a geofence.

Other areas that may be marked include train stations, airports, other ports, among other options.

The shipping company may use a geofence around these important locations to measure key performance indicators (KPIs), generate reports, send notifications about each location, for logging and accounting purposes, among other options.

New locations may also be added from time to time. For example, a shipping company may develop new clients, use new storage yards, among other factors. In this case, for a large shipping company that has a growing business, the process of adding new locations is never ending.

Each company could have thousands of geofence locations. Each location has at minimum two attributes, namely the address and type. The type could be selected from a list of various types such as client location, maintenance yard, parking yard, rest stop, among other options.

In some cases, each geofence may have further attributes. Attributes may include a color for the geofenced area, key performance indicators, what reports to generate for the geofence, what types of notifications to raise, the means of notification including email, short message service (SMS) message, a trigger used to send each type of notification, among other such attributes.

However, to enter each new location into a company's geofence monitoring system is typically a time-consuming task. The entering of such a geofence typically involves a user entering the location address on a map, adjusting a map zoom to contain the whole location and then drawing a polygon around the yard or area, and then entering other attributes for such a geofence area. In practice this could take approximately one minute per location and thus if the company has five thousand locations, this would take more than ten working days to create all the geofences for the company.

Further, the maintenance of a company geofence database is time-consuming. In some cases, yards will cease to be used, or will expand or change locations and this information needs to then be updated in the geofence database.

While the embodiments described herein create geofences based on fleet operations, in other cases, geofences could be created for different industries utilizing the methods and systems described herein. The present disclosure is therefore not limited to fleet operations, but such fleet operations are merely provided as an illustration.

In vehicle operations, sensor systems may be included on the vehicle and have a plurality of sensor apparatuses operating remotely from a central monitoring station to provide remote sensor data to a management or monitoring hub. For example, one sensor system involves fleet management or cargo management systems. In fleet management or cargo management systems, sensors may be placed on a trailer, shipping container or similar product to provide a central station with information regarding the container. Such information may include, but is not limited to, information concerning the current location of the trailer or shipping container, the temperature inside the shipping container or trailer, operational parameters such as tire pressure or engine temperature, that the doors on the shipping container or trailer are closed, whether a sudden acceleration or deceleration event has occurred, the tilt angle of the trailer or shipping container, among other data.

In other embodiments the sensor apparatus may be secured to a vehicle itself. As used herein, the term vehicle can include any motorized vehicle such as a truck, tractor, car, boat, motorcycle, snow machine, among others, and can further include a trailer, shipping container or other such cargo moving container, whether attached to a motorized vehicle or not.

In accordance with the embodiments described herein, a sensor apparatus may be any apparatus or computing device that is capable of providing data or information from sensors associated with the sensor apparatus to a central monitoring or control station. Sensors associated with the sensor apparatus may either be physically part of the sensor apparatus, for example a built-in global positioning system (GPS) chipset, or may be associated with the sensor apparatus through short range wired or wireless communications. For example, a tire pressure monitor may provide information through a Bluetooth™ Low Energy (BLE) signal from the tire to the sensor apparatus. In other cases, a camera may be part of the sensor apparatus or may communicate with a sensor apparatus through wired or wireless technologies. Other examples of sensors are possible.

A central monitoring station may be any server or combination of servers that are remote from the sensor apparatus. The central monitoring station can receive data from a plurality of sensor apparatuses.

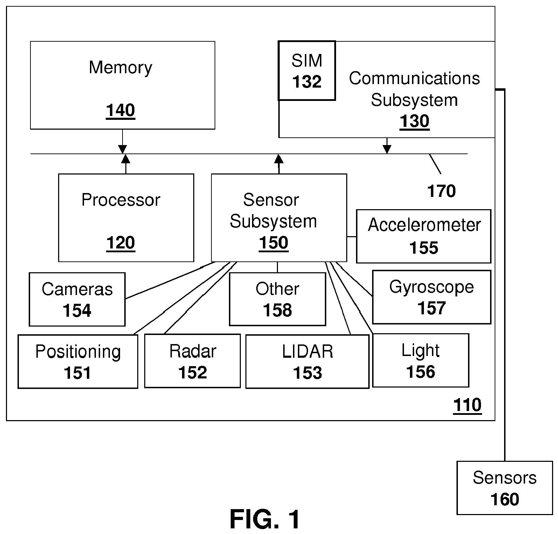

One sensor apparatus is shown with regard to **Figure 1**. The sensor apparatus of **Figure 1** is however merely an example and other mobile devices could equally be used in accordance with the embodiments of the present disclosure.

Reference is now made to **Figure 1**, which shows an example sensor apparatus **110**. Sensor apparatus **110** can be any computing device or network node. Such computing device or network node may include any type of electronic device, including but not limited to, mobile devices such as smartphones or cellular telephones. Examples can further include fixed or mobile devices, such as internet of things devices, endpoints, home automation devices, medical equipment in hospital or home environments, inventory tracking devices, environmental monitoring devices, energy management devices, infrastructure management devices, vehicles or devices for vehicles, fixed electronic devices, among others.

Sensor apparatus **110** comprises a processor **120** and at least one communications subsystem **130**, where the processor **120** and communications subsystem **130** cooperate to perform the methods of the embodiments described herein. Communications subsystem **130** may, in some embodiments, comprise multiple subsystems, for example for different radio technologies.

Communications subsystem **130** allows sensor apparatus **110** to communicate with other devices or network elements. Communications subsystem **130** may use one or more of a variety of communications types, including but not limited to cellular, satellite, Bluetooth™, Bluetooth™ Low Energy, Wi-Fi, wireless local area network (WLAN), near field communications (NFC), ZigBee, wired connections such as Ethernet or fiber, among other options.

As such, a communications subsystem **130** for wireless communications will typically have one or more receivers and transmitters, as well as associated components such as one or more antenna elements, local oscillators (LOs), and may include a processing module such as a digital signal processor (DSP). As will be apparent to those skilled in the field of communications, the particular design of the communication subsystem **130** will be dependent upon the communication network or communication technology on which the sensor apparatus is intended to operate.

If communications subsystem **130** operates over a cellular connection, a subscriber identity module (SIM) **132** may be provided to allow such communication. SIM **132** may be a physical card or may be virtual. In some embodiments SIM **132** may also be referred to as a universal subscriber identity module (USIM), as merely an identity module (IM), or as an embedded Universal Integrated Circuit Card (eUICC), among other options.

Processor **120** generally controls the overall operation of the sensor apparatus **110** and is configured to execute programmable logic, which may be stored, along with data, using memory **140**. Memory **140** can be any tangible, non-transitory computer readable storage medium, including but not limited to optical (e.g., CD, DVD, etc.), magnetic (e.g., tape), flash drive, hard drive, or other memory known in the art.

Alternatively, or in addition to memory **140**, sensor apparatus **110** may access data or programmable logic from an external storage medium, for example through communications subsystem **130**.

In the embodiment of **Figure 1**, sensor apparatus **110** may utilize a plurality of sensors, which may either be part of sensor apparatus **110** in some embodiments or may communicate with sensor apparatus **110** in other embodiments. For internal sensors, processor **120** may receive input from a sensor subsystem **150**.

Examples of sensors in the embodiment of **Figure 1** include a positioning sensor **151**, a Radar sensor **152**, a LIDAR **153**, one or more image sensors **154**, accelerometer **155**, light sensors **156**, gyroscopic sensors **157**, and other sensors **158**. Other sensors may be any sensor that is capable of reading or obtaining data that may be useful for sensor apparatus **110**. However, the sensors shown in the embodiment of **Figure 1** are merely examples, and in other embodiments different sensors or a subset of sensors shown in **Figure 1** may be used. For example, in one embodiment of the present disclosure, only a positioning sensor is provided.

The positioning sensor may use a positioning subsystem such as a Global Navigation Satellite System (GNSS) receiver which may be, for example, a Global Positioning System (GPS) receiver (e.g. in the form of a chip or chipset) for receiving GPS radio signals transmitted from one or more orbiting GPS satellites. References herein to "GPS" are meant to include Assisted GPS and Aided GPS. Although the present disclosure refers expressly to the "Global Positioning System", it should be understood that this term and its abbreviation "GPS" are being used expansively to include any GNSS or satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

Another sort of positioning subsystem may be used as well, e.g. a radiolocation subsystem that determines its current location using radiolocation techniques. In other words, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. A Wi-Fi™ Positioning System (WPS) may also be used as a positioning subsystem. Radiolocation techniques and/or WPS may also be used in conjunction with GPS in a hybrid positioning system

Other sensors may be external to the sensor apparatus **110** and communicate with the sensor apparatus **110** through, for example, communications subsystem **130**. Such other sensors are shown as sensors **160** and the embodiment of **Figure 1**. For example, a tire pressure monitoring system may communicate over short range communications such as Bluetooth™ Low Energy with communications subsystem **130** on the sensor apparatus **110.** Other examples of sensors **160** are possible.

Further, the sensor apparatus **110** of **Figure 1** may, in some embodiments, act as a gateway, and may communicate with other sensor apparatuses (not shown) on the trailer, where the other sensor apparatuses may act as hubs for a subset of the sensors on the vehicle or trailer.

Communications between the various elements of sensor apparatus **110** may be through an internal bus **170** in one embodiment. However, other forms of communication are possible.

Sensor apparatus **110** may be affixed to any fixed or portable platform. For example, sensor apparatus **110** may be affixed to shipping containers, truck trailers, truck cabs in one embodiment. In other embodiments, sensor apparatus **110** may be affixed to any vehicle, including motor vehicles (e.g., automobiles, cars, trucks, buses, motorcycles, etc.), aircraft (e.g., airplanes, unmanned aerial vehicles, unmanned aircraft systems, drones, helicopters, etc.), spacecraft (e.g., spaceplanes, space shuttles, space capsules, space stations, satellites, etc.), watercraft (e.g., ships, boats, hovercraft, submarines, etc.), railed vehicles (e.g., trains and trams, etc.), and other types of vehicles including any combinations of any of the foregoing, whether currently existing or after arising, among others.

In other cases, sensor apparatus **110** could be carried by a user.

Such sensor apparatus **110** may be a power limited device. For example sensor apparatus **110** could be a battery operated device that can be affixed to a shipping container or trailer in some embodiments. Other limited power sources could include any limited power supply, such as a small generator or dynamo, a fuel cell, solar power, among other options.

In other embodiments, sensor apparatus **110** may utilize external power, for example from the engine of a tractor pulling the trailer, from a land power source for example on a plugged in recreational vehicle or from a building power supply, among other options.

External power may further allow for recharging of batteries to allow the sensor apparatus **110** to then operate in a power limited mode again. Recharging methods may also include other power sources, such as, but not limited to, solar, electromagnetic, acoustic or vibration charging.

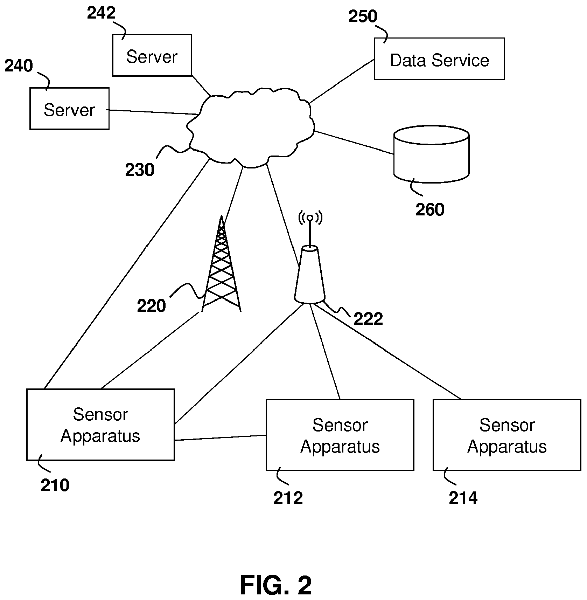

The sensor apparatus from **Figure 1** may be used in a variety of environments. One example environment in which the sensor apparatus may be used is shown with regard to **Figure 2**.

Referring to **Figure 2**, three sensor apparatuses, namely sensor apparatus **210**, sensor apparatus **212**, and sensor apparatus **214** are provided.

In the example of **Figure 2**, sensor apparatus **210** may communicate through a cellular base station **220** or through an access point **222**. Access point **222** may be any wireless communication access point. For example, access point **222** may be a WiFi router or a private router network. Also, a private router network may have a path from the access point name (APN) to a server, and may reduce network latency based on a location of the sensor apparatus in some embodiments.

Further, in some embodiments, sensor apparatus **210** could communicate through a wired access point such as Ethernet or fiber, among other options.

The communication may then proceed over a wide area network such as Internet **230** and proceed to servers **240** or **242**.

Similarly, sensor apparatus **212** and sensor apparatus **214** may communicate with servers **240** or server **242** through one or both of the base station **220** or access point **222**, among other options for such communication.

In other embodiments, any one of sensors **210**, **212** or **214** may communicate through satellite communication technology. This, for example, may be useful if the sensor apparatus is travelling to areas that are outside of cellular coverage or access point coverage.

In other embodiments, sensor apparatus **212** may be out of range of access point **222**, and may communicate with sensor apparatus **210** to allow sensor apparatus **210** to act as a relay for communications.

Communication between sensor apparatus **210** and server **240** may be one directional or bidirectional. Thus, in one embodiment sensor apparatus **210** may provide information to server **240** but server **240** does not respond. In other cases, server **240** may issue commands to sensor apparatus **210** but data may be stored internally on sensor apparatus **210** until the sensor apparatus arrives at a particular location. In other cases, two-way communication may exist between sensor apparatus **210** and server **240**.

A server, central server, processing service, endpoint, Uniform Resource Identifier (URI), Uniform Resource Locator (URL), back-end, and/or processing system may be used interchangeably in the descriptions herein. The server functionality typically represents data processing/reporting that are not closely tied to the location of movable image capture apparatuses **210**, **212**, **214**, etc. For example, the server may be located essentially anywhere so long as it has network access to communicate with image capture apparatuses **210**, **212**, **214**, etc.

Server **240** may, for example, be a fleet management centralized monitoring station. In this case, server **240** may receive information from sensor apparatuses associated with various trailers or cargo containers, providing information such as the location of such cargo containers, the temperature within such cargo containers, system information such as tire pressure or vibration sensor readings, any unusual events including sudden decelerations, temperature warnings when the temperature is either too high or too low, among other data. The server **240** may compile such information and store it for future reference. It may further alert an operator. For example, entry of the vehicle into a restricted geofenced area may provide a warning to operators.

Other examples of functionality for server **240** are possible.

In the embodiment of **Figure 2**, servers **240** and **242** may further have access to third-party information or information from other servers within the network. For example, a data services provider **250** may provide information to server **240**. Similarly, a data repository or database **260** may also provide information to server **240**.

For example, data services provider **250** may be a subscription based service used by server **240** to obtain current road and weather conditions.

Data repository or database **260** may for example provide information such as image data associated with a particular location, aerial maps, low latency access point names, virtual SIM information, or other such information.

The types of information provided by data service provider **250** or the data repository or database **260** is not limited to the above examples and the information provided could be any data useful to server **240.**

In some embodiments, information from data service provider **250** or the data repository from database **260** can be provided to one or more of sensor apparatuses **210**, **212**, or **214** for processing at those sensor apparatuses.

Utilizing the system from **Figures 1** and **2** above, a method for the creation of geofenced areas and the refining of geofenced area shapes is provided. In particular, for each sensor apparatus, a report may be generated which can be compiled by a network server to allow the creation and refinement of the geofence areas.

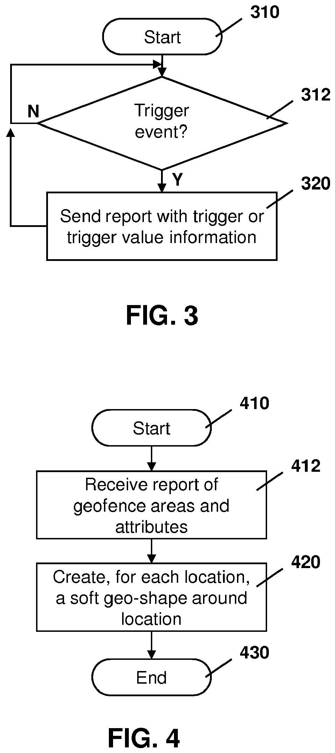

Reference is now made to **Figure 3**, which describes a process at a sensor apparatus, where such sensor apparatus could be one of many sensor apparatuses within a system.

In particular, the process of **Figure 3** starts at block **310** and proceeds to block **312** in which a check is made to determine whether a trigger condition has been met. For example, if the sensor apparatus is associated with a container, a door open or door closed event could be a trigger event. In other cases, if the container stops for a threshold period of time, this could be considered a trigger event. Further, if the sensor apparatus stops for a second period of time, where the second period of time is longer than the threshold, this could create a further trigger event indicating an extended stop.

In other cases, the trigger event could be a light level sensor within the container, a cabin overhead light within a cab of a vehicle turning on, and engine on or off event, connection to a certain network or access point, among other options.

From block **312**, if the trigger has not occurred then the process continues to loop to block **312** until a trigger event is detected.

Once a trigger event is detected, the process then proceeds to block **320** in which the sensor apparatus may provide a report to a network server such as server **240** from **Figure 2**. The report may, in certain circumstances, provide information with regard to the trigger event, including the location of the event and in some cases the type of event.

In other cases, a voting system may be utilized to refine the report. For example, the report may provide a vote value or significance value to the trigger event. Thus, for example, in the case of a shipping container, a door open or door closed event may be worth one vote. An extended stop event which is between two threshold time periods may be worth two votes. An extended stop which exceeds the second threshold value may be worth four votes. For example, if the container is in the same spot for over 24 hours, this may be worth four votes in some cases. This is illustrated in **Table 1** below.

**Table 1: Example Trigger Events and Vote Values**

| Trigger Event | Value |
|---|---|
| Door open event | 1 point |
| Stop for greater than time T1 and less than time T2 | 2 points |
| Stop for greater than time T2 | 4 points |

The example of the values and trigger events in **Table 1** are however merely provided for illustration. The actual system could be configured and the voting values configured based on the needs of the shipping company or network operators.

In other cases, trigger values can be assigned at the network element itself. In this case, the report at block **320** may simply include details about the trigger event.

From block **320**, the process may then proceed back to block **312** in which a further trigger event is sought. As will be appreciated by those in the art, the further trigger event will differ from the trigger event that caused the report at block **320** in order to ensure that the same event does not create multiple votes. Thus, for example, if a vehicle is stopped, it will not constantly generate reports at block **320** unless certain threshold time periods are met. Thus, for example, if the trigger is a stop for a first time period T1, then this could be reported at block **320**. The sensor apparatus would then not provide another report until the second threshold time period T2 is met, at which point a second report at block **320** could be provided to the network element. The network element could then replace the first report with the second report if the second report has a higher time value.

In other cases, the second report could simply provide the delta of the votes. Thus, for example, if the stopping between a first time period T1 and a second time period is worth two points or votes, and the stopping above the second time period T2 is worth four points or votes, then the second report at block **320** could simply include two points or votes as the delta from the first report to the second report.

Other examples are possible.

Utilizing the process of **Figure 3**, a plurality of sensor apparatuses could be providing reports to a network element. From the perspective of the network element, reference is now made to **Figure 4****.**

The process of **Figure 4** starts at block **410** and proceeds to block **412**. At block **412**, a server or other network element may receive a report or list of important locations from a company. In particular, normally shipping companies have a list of their important locations, with each location having at least the geo-location or address of the important location. In some cases, the list will include attributes. Such attributes may include, but are not limited to, an address, a geofence type, a color, among others. However, in some cases only the address is present. In other cases, only the address and geofence type may be present in such list.

As indicated above, the list at block **412** typically already exists with a shipping company. In this case, the server receives such list and proceeds to block **420**. At block **420**, the server may create, for each location within the list received at block **412**, a geofence. The geofence created at block **420** will initially include a soft boundary or geo-shape for the geofence. For example, in one embodiment the geo-shape may be a circle with a threshold the diameter such as 100 meters. However, 100m is merely provided as an example and in other embodiments a different diameter or radius may be used for the soft geo-shape. Further, in some cases the soft shape may not be circular and may instead be a square or other shape and may be created around the geo-location identified in the list.

From block **420**, the process proceeds to block **430** and ends.

Based on the above, the process of **Figure 4** creates a plurality of geofences with a default shape and default size. Each such geofence has no elements or reported events at the outset. In other words, each soft geofence is initialized with an empty list of geo-locations.

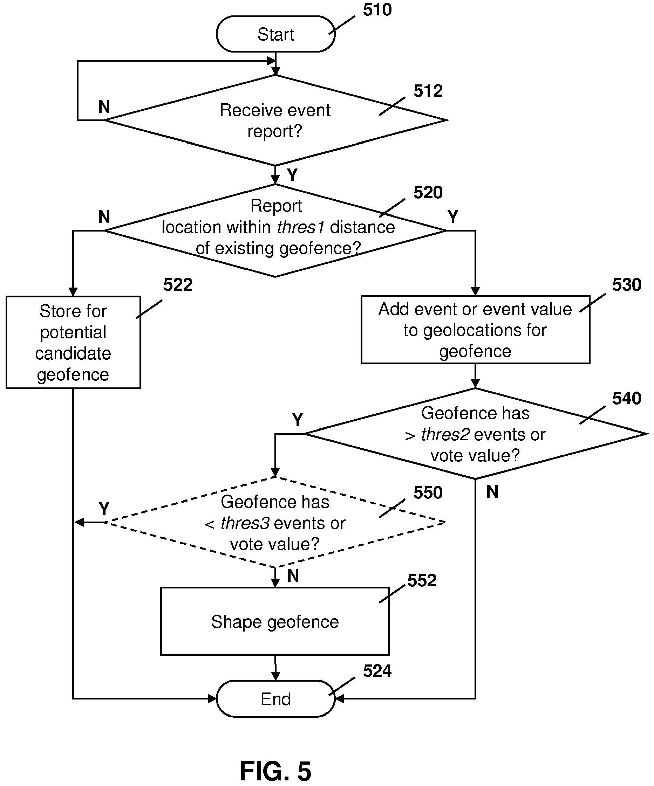

Reference is now made to **Figure 5**, which shows how the soft geofences may be shaped and adjusted based on event reports from the plurality of sensor apparatuses operating in a system. In particular, the process of **Figure 5** starts at block **510** and proceeds to block **512** in which a check is made to determine whether an event report has been received from one of the plurality of sensor apparatuses. If not, the process loops back to block **512** until an event report is received.

From block **512**, once an event report is received, the process may proceed to block **520** in which a check is made to determine whether the geo-location of the event reported at block **512** is within a threshold distance of an existing geofence. For example, the threshold may be set to 100 meters. In this case, if the event that is reported is within 100m of the geofence that was created in **Figure 4** then the conditions of block **520** are met.

If the location reported in the event is not within a threshold distance of an existing geofence, the process may proceed to block **522** in which the location and event may be stored for potential candidate geofence creation in the future. The creation of a candidate geofence is outside of the scope of the present disclosure.

From block **522** the process proceeds to block **524** and ends.

Conversely, at block **520**, if the location of the event received is within the threshold distance of the existing geofence, the process proceeds to block **530**. At block **530**, the event, or in some cases a value associated with the event, is linked to the geofence identified at block **520**. Specifically, the geo-location of the event is added to the list of geo-locations for the soft geofence.

From block **530** the process proceeds to block **540** in which check is made to determine whether the geofence has greater than a threshold number of geo-locations or values associated with it. For example, in the threshold at block **540** may be 50 geo-locations associated with the particular geofence in one case. In another case the threshold may be that event voting values are greater than 50. However, the value of 50 is merely provided as examples, and in other cases the threshold of block **540** may be more or less than this number.

From block **540**, if the number of geo-locations or the event voting values is less than the threshold then the process proceeds to block **524** and ends.

Conversely, if the threshold value is exceeded at block **540** then the process may optionally proceed to block **550** in which check is made to determine that the value is less than a further or upper threshold. For example, in some cases the shape of the geo-fence may be modified until the number of geo-locations associated with the geofence reaches an upper value of 500, at which point the process proceeds to block **524** and ends. However, this threshold value is merely provided as an illustration and in some cases block **550** may be avoided altogether.

From block **550**, if the geofence has a value less than the upper threshold, or directly from block **540** if block **550** is not included, the process may proceed to block **552**. At block **552**, the geofence may be shaped based on the identified geo-locations associated with the geofence. For example, the geo-shape of the geofence may be replaced by a geo-shape of a convex hull or convex envelope of the list of the geo-locations associated with the geofence.

In some cases, the shaping of the geofence at block **552** may go on forever, and include the latest 500 geo-locations, for example. The value 500 is provided as an illustration and the number that is used to create the geo-shape may vary based on a particular situation. Utilizing the latest threshold number of geo-locations allows for the shape of the geofence to always be adjusted if the yard grows or the shape of the yard changes.

In other embodiments, the geo-shape may stop being tuned after the upper threshold number of geo-locations have been received. In this case, a user or operator of the system can be prompted to refresh the geo-shape based on the latest threshold number of geo-locations if needed.

Other options are possible.

Once the geo-shape has been created at block **552**, the process may proceed to block **524** and end.

While the embodiment of **Figure 5** assumes a soft geo-shape that is created for a geofence, in other embodiments the geo-shape may be created manually if needed. In this case, the embodiment of **Figure 5** may be used to reshape or update the shape of the geofence as geo-locations from events at the sensor apparatuses are received at the server. Thus, the embodiment of **Figure 5** can be used to either suggest an adjustment or to automatically adjust the geo-shape generated from a user or operator based on sensor events.

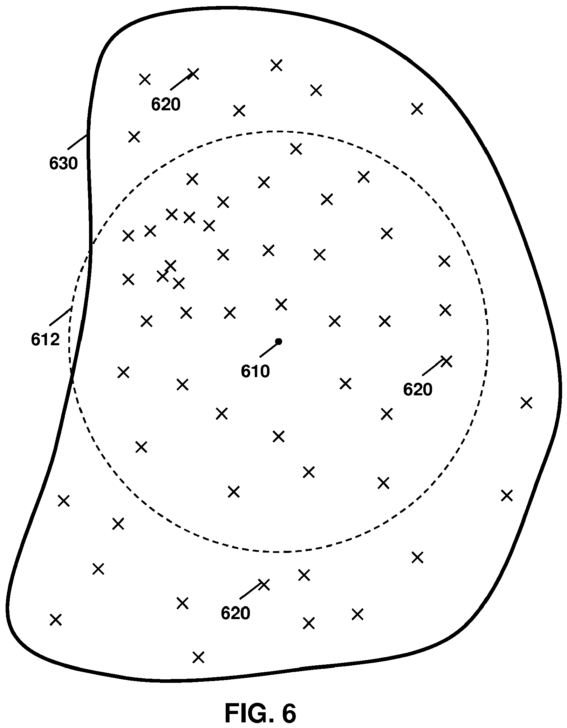

The process of **Figure 5** can for example be illustrated with regard to **Figure 6****.** In particular, **Figure 6** shows a block diagram of the shaping of a geofence utilizing the processes of **Figures 4** and **5****.**

The geofence includes an initial geo-location **610**, which is used as the basis for the creation of the geofence. As indicated above with regard to **Figure 4**, a soft boundary such as boundary **612** may be created around geo-location **610** to create the initial geofence.

Subsequently, a plurality of events having geo-locations **620** are received, and these are shown with an "X" in the embodiment of **Figure 6**.

Once the number of the geo-locations or the event voting values for a geofence reaches a threshold, then according to the process of **Figure 5** a boundary for the geofence may be reshaped. In particular, as seen by boundary **630**, the geofence shape is created to include a convex hull or convex envelope around the plurality of geo-locations associated with the geofence.

The shape of boundary **630** may be adjusted on an ongoing basis based on the latest number of geo-locations reported for the geofence in some cases. Thus, the shape may be continually evolving depending on the location of the events associated with the geofence.

Various factors or thresholds in the embodiments above can be configured by network operators. These include the threshold distance from the geofence within which to register events, the threshold value used to start to shape the geofenced area, the upper threshold used to determine the geo-shape of the geofence, among other such data. Such thresholds could be set by the network operator in order to provide a system which meets such operator's needs.

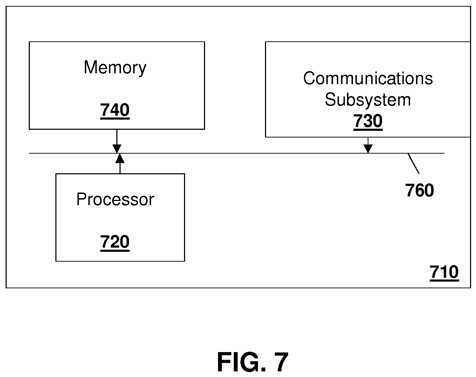

A server such as servers **240**, **242** or **250** may be any network node. For example, one simplified server that may perform the embodiments described above is provided with regards to **Figure 7**.

In **Figure 7**, server **710** includes a processor **720** and a communications subsystem **730**, where the processor **720** and communications subsystem **730** cooperate to perform the methods of the embodiments described herein.

The processor **720** is configured to execute programmable logic, which may be stored, along with data, on the server **710**, and is shown in the example of **Figure 7** as memory **740**. The memory **740** can be any tangible, non-transitory computer readable storage medium, such as optical (e.g., CD, DVD, etc.), magnetic (e.g., tape), flash drive, hard drive, or other memory known in the art. In one embodiment, processor **720** may also be implemented entirely in hardware and not require any stored program to execute logic functions.

Alternatively, or in addition to the memory **740**, the server **710** may access data or programmable logic from an external storage medium, for example through the communications subsystem **730**.

The communications subsystem **730** allows the server **710** to communicate with other devices or network elements.

Communications between the various elements of the server **710** may be through an internal bus **760** in one embodiment. However, other forms of communication are possible.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

While operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be employed. Moreover, the separation of various system components in the implementation descried above should not be understood as requiring such separation in all implementations, and it should be understood that the described program components and systems can generally be integrated together in a signal software product or packaged into multiple software products. In some cases, functions may be performed entirely in hardware and such a solution may be the functional equivalent of a software solution

Also, techniques, systems, subsystems, and methods described and illustrated in the various implementations as discrete or separate may be combined or integrated with other systems, modules, techniques, or methods. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and may be made.

While the above detailed description has shown, described, and pointed out the fundamental novel features of the disclosure as applied to various implementations, it will be understood that various omissions, substitutions, and changes in the form and details of the system illustrated may be made by those skilled in the art. In addition, the order of method steps is not implied by the order they appear in the claims.

When messages are sent to/from an electronic device, such operations may not be immediate or from the server directly. They may be synchronously or asynchronously delivered, from a server or other computing system infrastructure supporting the devices/methods/systems described herein. The foregoing steps may include, in whole or in part, synchronous/asynchronous communications to/from the device/infrastructure. Moreover, communication from the electronic device may be to one or more endpoints on a network. These endpoints may be serviced by a server, a distributed computing system, a stream processor, etc. Content Delivery Networks (CDNs) may also provide may provide communication to an electronic device. For example, rather than a typical server response, the server may also provision or indicate a data for content delivery network (CDN) to await download by the electronic device at a later time, such as a subsequent activity of electronic device. Thus, data may be sent directly from the server, or other infrastructure, such as a distributed infrastructure, or a CDN, as part of or separate from the system.

Typically, storage mediums can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory; a magnetic disk such as a fixed, floppy and removable disk; another magnetic medium including tape; an optical medium such as a compact disk (CD) or a digital video disk (DVD); or another type of storage device. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

In particular, the present disclosure may include the embodiments of the following clauses:
AA. A method at a network element for creating a geofence shape, the method comprising: creating a geofenced area based on location information, the geofenced area having a default shape and size; receiving from a sensor apparatus, an event report, the event report including a location; associating the location of the event report with the geofenced area; determining that a number of event reports associated with the geofenced area exceeds a threshold; and creating a geofence shape for the geofenced area based on locations of the event reports.
BB. The method of clause AA, wherein the geofence shape is a convex envelope surrounding the locations of the event reports.
CC. The method of clause AA or clause BB, wherein the associating comprises determining the event report is within a threshold distance of the geofenced area.
DD. The method of any one of clauses AA to CC, wherein the creating further comprises adding attributes to the geofenced area.
EE. The method of any one of clauses AA to DD, wherein the creating the geofence shape uses a predetermined number of event reports to create the shape.
FF. The method of clause EE, wherein the predetermined number of event reports includes event reports received most recently up to the predetermined number.
GG. The method of any one of clauses AA to FF, wherein the creating is only performed until a number of event reports reaches an upper threshold.
HH. The method of clause GG, further comprising generating a user prompt to update the shape of the geofenced area when the number of event reports exceeds the upper threshold.
II. The method of any one of clauses AA to HH, wherein the default size and shape comprises a circle having a defined radius.
JJ. The method of any one of clauses AA to II, wherein the creating is based on a list of locations, wherein the creating creates a plurality of geofenced areas, each geofenced area corresponding to one location within the list of locations.
KK. A network element for creating a geofence shape, the network element comprising: a processor; and a communications subsystem, wherein the network element is configured to: create a geofenced area based on location information, the geofenced area having a default shape and size; receive from a sensor apparatus, an event report, the event report including a location; associate the location of the event report with the geofenced area; determine that a number of event reports associated with the geofenced area exceeds a threshold; and create a geofence shape for the geofenced area based on locations of the event reports.
LL. The network element of clause KK, wherein the geofence shape is a convex envelope surrounding the locations of the event reports.
MM. The network element of clause KK or clause LL, wherein the associating comprises determining the event report is within a threshold distance of the geofenced area.
NN. The network element of any one of clauses KK to MM, wherein the creating further comprises adding attributes to the geofenced area.
OO. The network element of any one of clauses KK to NN, wherein the creating the geofence shape uses a predetermined number of event reports to create the shape.
PP. The network element of clause OO, wherein the predetermined number of event reports includes event reports received most recently up to the predetermined number.
QQ. The network element of any one of clauses KK to PP, wherein the creating is only performed until a number of event reports reaches an upper threshold.
RR. The network element of clause QQ, further comprising generating a user prompt to update the shape of the geofenced area when the number of event reports exceeds the upper threshold.
SS. The network element of any one of clauses KK to RR, wherein the default size and shape comprises a circle having a defined radius.
TT. The network element of any one of clauses KK to SS, wherein the creating is based on a list of locations, wherein the creating creates a plurality of geofenced areas, each geofenced area corresponding to one location within the list of locations.
UU. A computer readable medium for storing instruction code for creating a geofence shape, which, when executed by a processor of a network element, cause the network element to: create a geofenced area based on location information, the geofenced area having a default shape and size; receive from a sensor apparatus, an event report, the event report including a location; associate the location of the event report with the geofenced area; determine that a number of event reports associated with the geofenced area exceeds a threshold; and create a geofence shape for the geofenced area based on locations of the event reports.

## Claims

1. A method at a network element for creating a geofence shape, the method comprising:
creating a geofenced area based on location information, the geofenced area having a default shape and size;
receiving from a sensor apparatus, an event report, the event report including a location;
associating the location of the event report with the geofenced area;
determining that a number of event reports associated with the geofenced area exceeds a threshold; and
creating a geofence shape for the geofenced area based on locations of the event reports.

2. The method of claim 1, wherein the geofence shape is a convex envelope surrounding the locations of the event reports.

3. The method of claim 1 or 2, wherein the associating comprises determining the event report is within a threshold distance of the geofenced area.

4. The method of any previous claim, wherein the creating further comprises adding attributes to the geofenced area.

5. The method of any previous claim wherein the creating the geofence shape uses a predetermined number of event reports to create the shape.

6. The method of claim 5, wherein the predetermined number of event reports includes event reports received most recently up to the predetermined number.

7. The method of any previous claim, wherein the creating is only performed until a number of event reports reaches an upper threshold.

8. The method of claim 7, further comprising generating a user prompt to update the shape of the geofenced area when the number of event reports exceeds the upper threshold.

9. The method of any previous claim, wherein the default size and shape comprises a circle having a defined radius.

10. The method of any previous claim, wherein the creating is based on a list of locations, wherein the creating creates a plurality of geofenced areas, each geofenced area corresponding to one location within the list of locations.

11. A network element for creating a geofence shape, the network element comprising:
a processor; and
a communications subsystem,
wherein the network element is configured to:
create a geofenced area based on location information, the geofenced area having a default shape and size;
receive from a sensor apparatus, an event report, the event report including a location;
associate the location of the event report with the geofenced area;
determine that a number of event reports associated with the geofenced area exceeds a threshold; and
create a geofence shape for the geofenced area based on locations of the event reports.

12. The network element of claim 11, wherein the geofence shape is a convex envelope surrounding the locations of the event reports.

13. The network element of claim 11 or 12, wherein the associating comprises determining the event report is within a threshold distance of the geofenced area.

14. The network element of claim 11, 12 or 13 wherein the creating further comprises adding attributes to the geofenced area.

15. A computer readable medium for storing instruction code for creating a geofence shape, which, when executed by a processor of a network element, cause the network element to:
create a geofenced area based on location information, the geofenced area having a default shape and size;
receive from a sensor apparatus, an event report, the event report including a location;
associate the location of the event report with the geofenced area;
determine that a number of event reports associated with the geofenced area exceeds a threshold; and
create a geofence shape for the geofenced area based on locations of the event reports.
